# NEUE EUROPÄISCHE PATENTSCHRIFT

(11) **EP 2 691 324 B2**
(45) Veröffentlichungstag und Bekanntmachung des Hinweises auf die Entscheidung über den Einspruch: **08.09.2021**
(45) Hinweis auf die Patenterteilung: 03.06.2015
(21) Anmeldenummer: 11788769.5
(22) Anmeldetag: 10.11.2011
(51) Int. Cl.: B65G 47/51

(54) **SPEICHERVORRICHTUNG**
STORAGE DEVICE
DISPOSITIF DE STOCKAGE

(30) Priorität: 31.03.2011 DE 102011015670
(43) Veröffentlichungstag der Anmeldung: 05.02.2014
(73) Patentinhaber: KHS GmbH, 44143 Dortmund (DE)
(72) Erfinder: EHMER, Wilfried, 44227 Dortmund (DE); SCHOLZ, Ulrich, 59348 Lüdinghausen (DE)
(86) Internationale Anmeldenummer: PCT/EP2011/005645
(87) Internationale Veröffentlichungsnummer: WO 2012/130266

(56) Entgegenhaltungen:
- EP-A1- 1 632 445
- EP-A1- 1 726 544
- WO-A1-2006/040058
- WO-A1-2011/012802
- FR-A1- 2 887 533

## Beschreibung

Die Erfindung bezieht sich auf eine Speichervorrichtung für Produkte.

Speichervorrichtungen dieser Art sind in verschiedenen Ausführungen bekannt und werden insbesondere auch als Pufferspeicher in Anlagen zum Ver- und/oder Bearbeiten von Produkten verwendet. Grundsätzlich bestehen derartige Speichervorrichtungen aus zwei parallel zueinander und nebeneinander angeordneten Transportelementen, die eine entgegen gesetzte Förder- oder Transportrichtung aufweisen und eine Transportfläche bilden, auf der die Produkte aufstehen oder aufliegen. An einem Ende der Transportfläche bildet eines der Transportelemente einen Produkteinlauf, über den die Produkte der Speichervorrichtung bzw. deren Transportfläche zugeführt werden, und das andere Transportelement einen Produktauslauf, über den im normalen Betrieb die Produkte aus der Speichervorrichtung bzw. von der Transportfläche abgeführt werden. Dem Produkteinlauf und dem Produktauslauf gegenüberliegend ist an der Transportfläche ein Überleitelement vorgesehen, welches ein Umlenken oder Überleiten der Produkte von dem einen Transportelement auf das andere Transportelement bewirkt. Durch Verstellen der Position des Überleitelementes mit einem Verstellantrieb relativ zum Produkteinlauf bzw. Produktauslauf, d.h. durch Änderung des Abstandes zwischen dem Überleitelement und dem Produkteinlauf bzw. Produktauslauf kann die Speicher- oder Aufnahmekapazität der Speichervorrichtung bzw. der auf den Transportelementen zwischen dem Überleitelement und dem Produkteinlauf bzw. Produktauslauf gebildeten Speicher- oder Pufferstrecken verändert und an die jeweiligen Erfordernisse angepasst werden. Die Transportelemente sind jeweils von wenigstens einem endlos umlaufend angetriebenen Transportband, in der Regel aber von mehreren zumindest quer zur Transportrichtung dicht aneinander anschließenden Transportbändern gebildet.

Bei bekannten Speichervorrichtungen der vorgenannten Art (EP 1 807 329 A1, EP 1 632 445 A1) ist das Überleitelement ein passives Element, d.h. ein Element, welches lediglich einen Führungs- oder Überleitabschnitt für die Produkte bildet, der im Wesentlichen aus einer Anlage- oder Gleitfläche für die Produkte besteht. Der Überleitabschnitt bzw. dessen Anlage- und Gleitfläche erstreckt sich über die gesamte oder im Wesentliche die gesamte Breite der beiden Transportelemente und ist an der dem Produkteinlauf und Produktauslauf zugewandten Seite um wenigstens eine Achse senkrecht zur Transportfläche oder zu der von dieser Transportfläche definierten Transportebene konkav gewölbt. Nachteilig ist bei diesen bekannten Speichervorrichtungen, dass der Verstellantrieb für das Überleitelement oberhalb der Transportfläche oder der Transportebene vorgesehen ist und hierdurch die Zugänglichkeit, insbesondere auch die optische Zugänglichkeit der Transportfläche für eine opto-elektrische Steuerung und/oder Überwachung der Speichervorrichtung beeinträchtigt wird, und/oder dass eine Verstellung des Überleitelementes und damit eine Änderung der Aufnahme- oder Speicherkapazität der Speichervorrichtung unabhängig von einer Steuerung oder Regelung der Transportelemente, insbesondere der Steuerung oder Regelung der Fördergeschwindigkeit der Transportelemente nicht möglich ist.

Bekannt sind weiterhin Speichervorrichtungen (DE 20 2004 012 848 U1), die jeweils aus zwei parallel zueinander, aber deutlich voneinander beabstandeten endlos umlaufend angetriebenen Transportbändern mit entgegen gesetzter Förderrichtung und aus einer zwischen den Transportbändern wirkenden Transfereinheit bestehen, die zur Änderung der Speicher- oder Aufnahmekapazität der Speichervorrichtung in Längsrichtung der Transportbänder verfahrbar ist und mit der die Produkte von dem den Produkteinlauf bildenden Transportband auf das den Produktauslauf bildende Transportband geleitet werden. Die Transfereinheit besitzt hierfür z.B. ein um eine vertikale Achse umlaufend angetriebenes Transportelement, welches die Produkte von dem einen Transportband abnimmt und an das andere Transportband bewegt. Nachteilig ist bei diesen bekannten Speichervorrichtungen u.a., dass die von den beiden Transportelementen zwischen der Transfereinrichtung und dem Produkteinlauf bzw. Produktauslauf gebildeten Speicherstrecken im Vergleich zum maximalen Durchmesser der Produkte eine relativ geringe Breite aufweisen, sodass zur Erzielung einer vorgegebenen maximalen Speicherkapazität eine relativ große Baulänge der Speichervorrichtung erforderlich ist. Nachteilig ist aber auch, dass bei Ausbildung der Speicherstrecken mit einer Breite, die größer ist als der Durchmesser der Produkte die Transfereinrichtung nur mit einem hohen konstruktiven Aufwand realisiert werden kann und darüber hinaus ein störungsfreies Überleiten der Produkte von dem den Produkteinlauf bildenden Transportelement an das den Produktauslauf bildenden Transportelement nicht gewährleistet ist.

"Produkte" im Sinne der Erfindung sind insbesondere Packmittel und dabei u.a. auch bereits gefüllte Packmittel, sowie Packmittelgruppen, d.h. Gebinde, die jeweils aus wenigstens zwei Packmittel, insbesondere auch aus jeweils wenigstens zwei gefüllten Packmitteln bestehen.

"Packmittel" sind im Sinne der Erfindung insbesondere Verpackungen oder Behältnisse, die im Lebensmittelbereich und dabei speziell auch im Getränkebereich üblicherweise verwendet werden, und zwar u.a. Behälter, wie z. B. Flaschen, Dosen, auch Weichverpackungen, beispielsweise solche hergestellt aus Karton und/oder Kunststofffolie und/oder Metallfolie, Transportbehälter, z.B. Flaschenkästen usw.

Der Ausdruck "im Wesentlichen" bzw. "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen. Aufgabe der Erfindung ist es, eine Speichervorrichtung aufzuzeigen, die bei optimaler Zugänglichkeit der Transportfläche bzw. deren Speicherabschnitte oder - strecken und bei verbesserter Betriebssicherheit ohne erhöhten konstruktiven Aufwand realisierbar ist. Zur Lösung dieser Aufgabe ist eine Speichervorrichtung entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in sehr vereinfachter schematischer Funktionsdarstellung eine Draufsicht auf eine Speichervorrichtung gemäß der Erfindung;
- Fig. 2: die Speichervorrichtung der Figur 1 in einer schematischen Stirnansicht und in Blickrichtung vom Produkt- oder Behältereinlauf bzw. vom Produkt- oder Behälterauslauf auf das Überleitelement;
- Fig. 3: in vereinfachter Darstellung einen Längsschnitt durch die Speichervorrichtung der Figur 1;
- Fig. 4: und 5 Darstellungen ähnlich den Figuren 1 und 2 bei einer weiteren Ausführungsform der Erfindung.

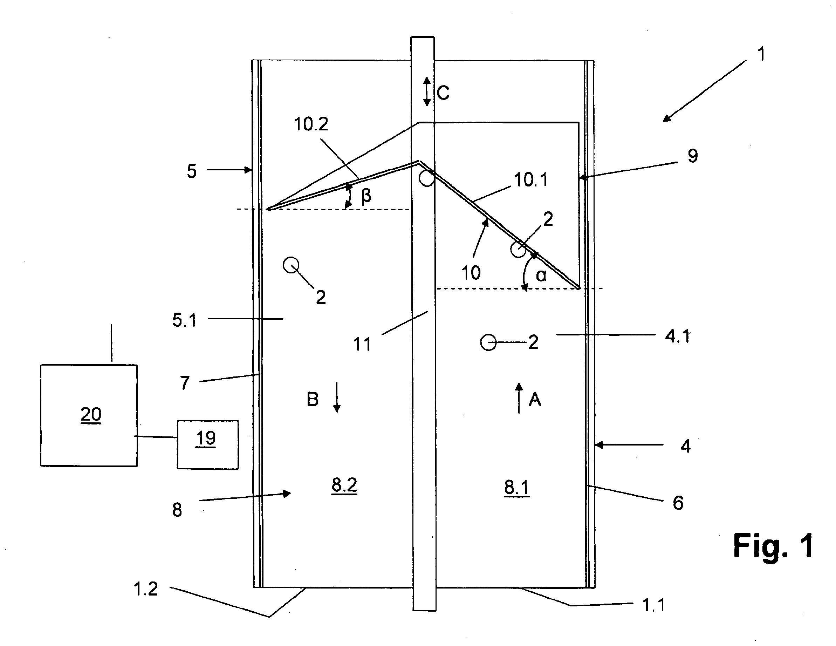

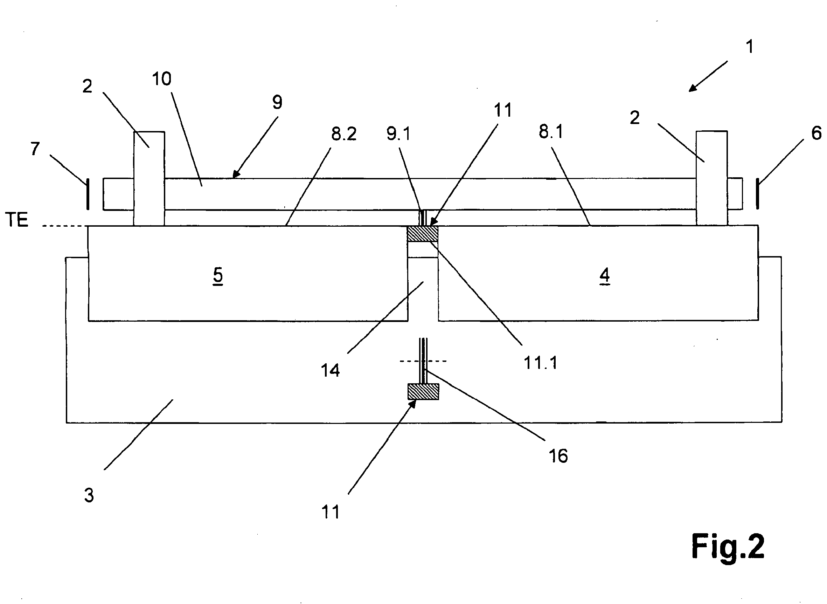

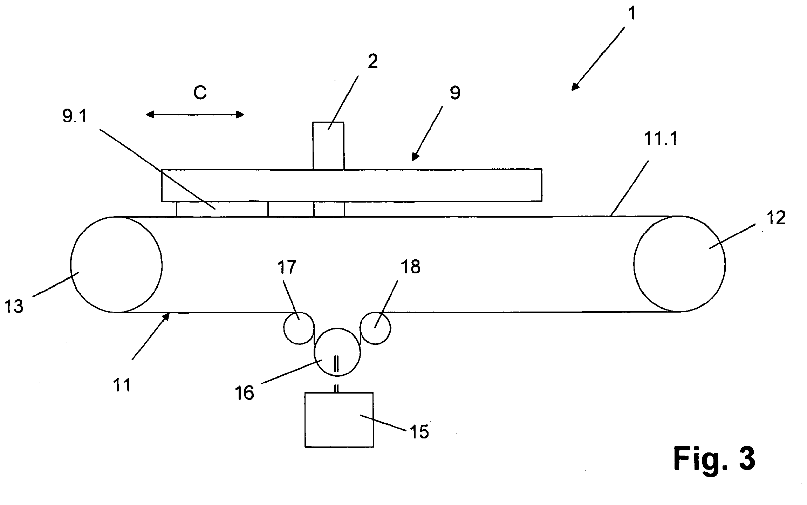

Die in den Figuren 1 - 3 allgemein mit 1 bezeichnete Speichervorrichtung dient beispielsweise als Pufferspeicher zum Puffern oder Zwischenspeichern von Produkten oder Produkteinheiten, insbesondere von Behältern 2. Die Speichervorrichtung 1 besitzt bei der dargestellten Ausführungsform 2 an einem Maschinengestell 3 zwei Transporteure 4 und 5, die jeweils aus einem eine geschlossene Schlaufe bildenden und endlos umlaufenden Transportband 4.1 und 5.1 bestehen und die mit den oberen Längen ihrer Schlaufen eine gemeinsame Transportfläche 8 für die Behälter 2 in einer horizontalen oder im Wesentlichen horizontalen Transportebene TE bilden. Die Transportelemente 4 und 5 sind parallel zueinander und voneinander etwas beabstandet angeordnet und durch nicht dargestellte Antriebe gesteuert derart antreibbar, dass das Transportelement 4 eine durch den Pfeil A gekennzeichnete Transportrichtung und das Transportelement 5 eine durch den Pfeil B gekennzeichnetes und der Transportrichtung A entgegen gesetzte Transportrichtung für die auf der Transportfläche 8 aufrecht stehenden, d.h. mit ihren Behälterachsen senkrecht zur Transportebene TE orientierten Behälter 2 aufweisen. Das Transportelement 4 bildet mit seinem einen Ende einen Produkt-oder Behältereinlauf 1.1, über den die Behälter 2 der Speichervorrichtung 1 zugeführt werden. Das Transportelement 5 bildet an seinem einen, dem Behältereinlauf 1.1 benachbarten Ende einen Produkt- oder Behälterauslauf 1.2, an welchem die Behälter 2 aus der Speichervorrichtung abgeführt werden. Bei der dargestellten Ausführungsform besitzen die Transportelemente 4 und 5 senkrecht zur ihrer Transportrichtung A und B und parallel zur Transportebene TE dieselbe Breite, die einem Vielfachen des maximalen Durchmessers der Produkte bzw. der Behälter 2 entspricht.

Mit M ist eine vertikale, parallel zu den Transportrichtungen A und B orientierte Mittelebene bezeichnet. Mit 6 und 7 sind zwei seitliche Behälterführungen bezeichnet, die sich an den beiden Längsseiten der Transportfläche 8 in Transportrichtung A bzw. B erstrecken und damit den wirksamen Bereich der Transportfläche 8, der von den Behältern 2 eingenommen werden kann, seitlich begrenzen.

Die Speichervorrichtung 1 weist weiterhin ein Umlenk- oder Überleitelement 9 mit einem Überleitbereich 10 auf, der sich quer zur Transportrichtung A bzw. B über die gesamte wirksame Breite der Transportfläche 8 erstreckt. Bei der dargestellten Ausführungsform ist das Überleitelement 9 so ausgeführt, dass dessen Überleitabschnitt 10 zwei Teilabschnitte 10.1 und 10.2 aufweist, die bei der dargestellten Ausführungsform geradlinig ausgebildet sind und von denen der Teilabschnitt 10.1 sich über den von dem Transportelement 4 gebildeten Teil der Transportfläche 8 und der Teilabschnitt 10.1 über den von dem Transportelement 5 gebildeten Teil der Transportfläche 8 erstreckt. Weiterhin ist der Teilabschnitt 10.1 so ausgebildet, dass er mit einer senkrecht zur Transportrichtung A und parallel zur Transportebene TE orientierten horizontalen Achsrichtung einen Winkel α kleiner als 90°, beispielsweise einen Winkel im Bereich zwischen etwa 30° bis 50° einschließt, der sich zur Mittelebene M der Speichervorrichtung 1 öffnet. Der Teilabschnitt 10.2 schließt mit einer horizontalen, senkrecht zur Transportrichtung B und parallel zur Transportebene TE orientierten Achse einen Winkel β ein, der bei der dargestellten Ausführungsform kleiner ist als der Winkel α, beispielsweise 20° bis 35° beträgt und der sich ebenfalls zur Mittelebene M hin öffnet.

Durch die beschriebene Ausbildung werden die an dem Behältereinlauf 1.1 zugeführten Behälter 2 auf dem Teilabschnitt der Transportfläche 8, der von dem Transportelement 4 zwischen dem Behältereinlauf 1.1 und dem Überleitabschnitt 10 gebildet ist und die mit 8.1 bezeichnete Speicherstrecke bildet, zumindest zum Teil an den Teilabschnitt 10.1 und dann an diesem Teilabschnitt gleitend an den Teilabschnitt 10.2 bewegt. Die Behälter 2 gelangen damit auf den Teilabschnitt der Transportfläche 8, der zwischen dem Teilabschnitt 10.2 und dem Behälterauslauf 1.2 gebildet ist und die mit 8.2 bezeichnete Speicherstrecke bildet. Das Überleiten der Behälter 2 von Speicherstrecke 8.1 an die Speicherstrecke 8.2 erfolgt aber durch den Staudruck, den die auf dem Transportelemente 4 im Behälterstrom gegeneinander anliegenden Behälter 2 erzeugen, zum Teil auch bereits vor Erreichen Überleitabschnittes 10. Grundsätzlich erfolgt das Überleiten der Behälter vom Transportelement 4 an das Transportelement 5 stets auf dem Teilbereich der Transportfläche 8, der sich vom Behältereinlauf 1.1 bzw. Behälterauslauf 1.2 her gesehen vor dem Überleitelement 9 befindet.

Das Überleitelement 9 ist parallel zu den Transportrichtungen A und B gesteuert verfahrbar (Doppelpfeil C der Figur 1) und hierfür an einem band-, riemen- oder kettenartigen Antriebs- und Führungselement 11 vorgesehen, welches eine geschlossene Schlaufe bildet und hierfür über wenigstens zwei Umlenkräder 12 und 13 geführt ist. Das Überleitelement 9 ist über einen Steg 9.1 an der oberen Länge 11.1 der von dem Antriebs- und Führungselement 11 gebildeten Schlaufe befestigt. Weiterhin ist die von dem Antriebs- und Führungselement 11 gebildete Schlaufe so angeordnet, dass die obere Länge 11.1 ebenfalls in der Transportebene TE liegt und dort den Spalt 14 zwischen den beiden Transportelementen 4 und 5 verschließt. Weiterhin ist die Mittelebene der von dem Antriebs- und Führungselement 11 gebildeten Schlaufe auch die Mittelebene M.

Das Antriebs- und Führungselement 11 ist Bestandteil eines Stell-Antriebes zum Verstellen der Position des Überleitelementes 9 entsprechend dem Doppelpfeil C. Hierfür ist unterhalb der Transportebene TE das Antriebs- und Führungselement 11 über ein von einem Stellmotor 15 angetriebenes Antriebsrad 16 sowie über zwei Umlenkräder 17 und 18 geführt, welch letztere für eine ausreichende Umschlingung des Antriebs- und Führungselementes 11 um das Antriebsrad 16 sorgen. Durch die Verstellung der Position des Überleitelementes 9 kann die Speicherkapazität der Speichervorrichtung 1 bzw. der Speicherstrecken 8.1 und 8.2 verändert werden, und zwar z.B. in Abhängigkeit von der Größe des Behälterstroms am Behältereinlauf 1.1 (Anzahl der je Zeiteinheit zugeführten Behälter 2) und/oder in Abhängigkeit von dem Belegungsgrad des zwischen dem Überleitelement 9 und dem Behältereinlauf 1.1 sowie Behälterauslauf 1.2 gebildeten Teils der Transportfläche 8, d.h. bei einer Erhöhung des Behälterstromes am Behältereinlauf 1.1 und/oder bei einer Erhöhung des Belegungsgrades wird das Überleitelement 9 im Sinne einer Vergrößerung seines Abstandes zum Behältereinlauf 1.1 bzw. Behälterauslauf 1.2 bewegt. Bei einer Reduzierung des Behälterstromes oder des Belegungsgrades erfolgt eine gesteuerte Bewegung des Überleitelementes 9 in umgekehrter Richtung. Grundsätzlich ist die Bewegung bzw. Verstellung des Überleitelementes 9 unabhängig von der Bewegung und Transportgeschwindigkeit der Transportelemente 4 und 5 steuerbar. Weiterhin besteht auch die Möglichkeit, die Transportelemente 4 und 5 und deren Transportgeschwindigkeit unabhängig voneinander zu steuern.

Die zur Steuerung oder Regelung der Aufnahmekapazität der Speichervorrichtung 1 bzw. der Speicherstrecken 8.1 und 8.2 notwendigen Steuerdaten werden von wenigstens einem opto-elektrischen Sensor- oder Erkennungssystem geliefert, welches in der Figur 1 schematisch mit dem Block 19 angedeutet ist, und in einer elektronischen Steuereinrichtung 20, vorzugsweise in einer rechnergestützten Steuereinrichtung 20 verarbeitet, die dann den Antriebs-oder Stellmotor 16 ansteuert.

Bei dem Sensorsystem 19 handelt es sich um wenigstens eine elektronische Kamera mit der der Belegungsgrad der Speicherstrecken 8.1 und 8.2 erfassbar ist. Generell ist das Sensorsystem 19 so ausgebildet, dass mit diesem System alle relevanten aktuellen Informationen und Daten über den Betriebszustand zumindest eines Teilbereichs der Speichervorrichtung 1 erfasst werden. Die entsprechenden Bilddaten werden dann in der Steuereinrichtung 20 oder in einem dortigen Auswertungssystem mit einem entsprechenden Programm oder mit einer Bildverarbeitung aufbereitet und analysiert und zur aktiven Steuerung des Überleitelementes 9 ausgewertet. Unter "Bildverarbeitung" ist dabei zu verstehen, dass mit Hilfe eines geeigneten Programms aus den von der wenigstens einen elektronischen Kamera dieses Systems aufgenommenen Bildern Informationen über die innerhalb des Bildes befindlichen Behälter 2 gewonnen werden. Dabei wird beispielsweise zunächst ermittelt, welche Behälter 2 sich innerhalb des jeweiligen Bildes befinden. Insbesondere kann dabei auch die Orientierung der Behälter 2 in verschiedenen Bereichen der Transportfläche 8 erfasst werden, beispielsweise die in der erforderlichen Weise aufrecht stehenden Behälter 2 und die eventuell umgefallenen, auf der Transportfläche 8 liegenden Behälter. Mit dieser Ausbildung des Sensorsystems 19 und der Verarbeitung der von dem Sensorsystem 19 gelieferten Bilddaten, in der Steuereinrichtung 20 ist es dann nicht nur möglich, die Speicher- oder Aufnahmekapazität der Speichervorrichtung 1 dem jeweiligen Erfordernissen optimal anzupassen, sondern auch Betriebsstörungen beispielsweise durch umgefallene Behälter 2, durch artfremde Behälter 2 usw. zu erkennen und zu vermeiden, z.B. durch Hinweise an das Bedienungspersonal einer die Speichervorrichtung 1 aufweisenden Anlage und/oder durch entsprechende Ansteuerung der Transportelemente 4 und 5 oder weiterer der Speichervorrichtung 1 in einer Anlage vorausgehender oder nachfolgender Anlagenkomponenten usw. Unter Verwendung eines entsprechenden Programms werden die jeweiligen Belegungsgrade (z.B. Anzahl der Behälter je Flächeneinheit der Speicherstrecke 8.1 bzw. 8.2) für jede von dem Transportelement 4 und dem Transportelement 5 gebildete Speicherstrecke 8.1 bzw. 8.2 einzeln erfasst, und zwar beispielsweise fein abgestuft, z.B. in Stufen von jeweils 2%.

Weiterhin erfolgt über die Steuereinrichtung 20 nicht nur die Steuerung der Position des Überleitelementes 9, sondern auch die Steuerung der Transportelemente 4 und 5 bzw. deren Transportgeschwindigkeit, und zwar bevorzugt die Transportgeschwindigkeit des Transportbandes 4 in Abhängigkeit von dem Belegungsgrad von Transporteinheiten oder Maschinen, die der Speichervorrichtung 1 in einer Anlage vorgeschaltet sind, und die Transportgeschwindigkeit des Transportelementes 5 in Abhängigkeit von dem Belegungsgrad von Transporteinheiten oder Maschinen, die der Speichervorrichtung 1 in einer Anlage nachgeschaltet sind.

Das Überleitelement 9 ist vorzugsweise entfernbar, so dass die Behälter 2 zumindest auf dem Transportelement 4 bis an das dem Behältereinlauf 1.1 gegenüber liegenden Ende des Transportelementes 4 gefördert werden können, beispielsweise zum Leerfahren der Speichervorrichtung 1.

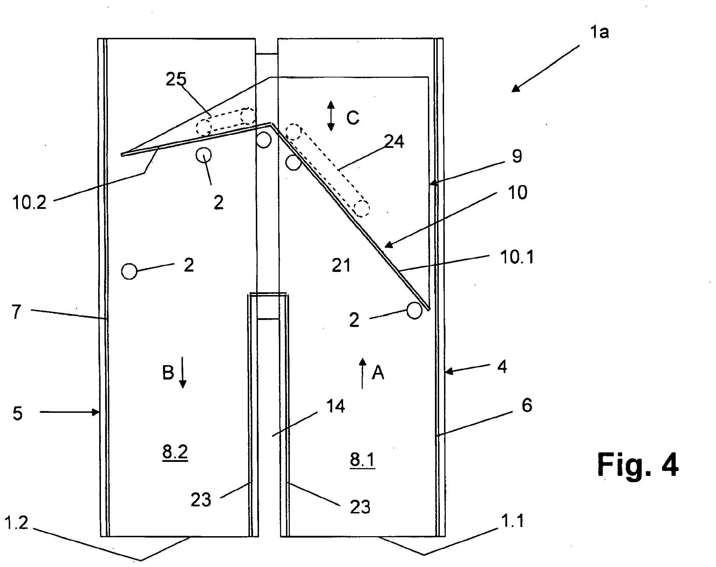

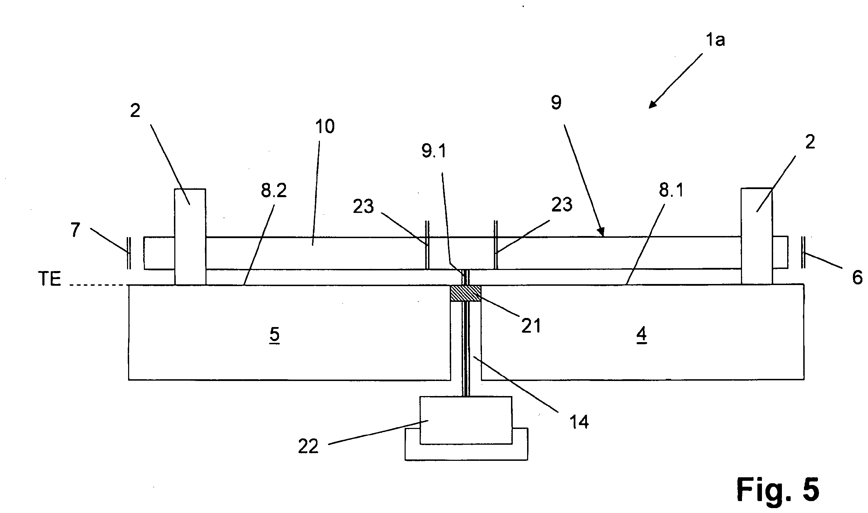

Die Figuren 4 und 5 zeigen als weiter Ausführung eine Speichervorrichtung 1a, die sich von der Speichervorrichtung 1 im Wesentlichen dadurch unterscheidet, dass das Überleitelement 9 nicht an dem eine geschlossene Schlaufe bildenden Antriebs- und Führungselement 11, sondern an einem leistenartigen Halte- oder Tragelement 21 vorgesehen ist, welches durch einen wiederum unterhalb der Transportebene TE angeordneten Stell- oder Linearantrieb 22 zusammen mit dem Überleitelement 9 entsprechend dem Pfeil C parallel zu den Transportrichtungen A und B verstell- oder verfahrbar ist, und zwar in der vorbeschriebenen Weise gesteuert durch die elektronische Steuereinrichtung 20 und das Sensorsystem 19. Das Tragelement 21 ist dabei an dem Maschinengestell 3 derart geführt, dass dessen Oberseite in der Transportebene TE liegt und das Tragelement 21 somit den Spalt 14 zwischen den beiden Transportelementen 4 und 5 zumindest in dem dem Überleitelement 9 bzw. dem Überleitabschnitt 10 benachbarten Bereich der Transportfläche 8 verschließt. Da das Tragelement 21 sich nur über eine Teillänge der Transportelemente 4 und 5 erstreckt, sind zusätzlich Behälterführungsmittel 23 vorgesehen, die die Transportelemente 4 und 5 bzw. die von diesen gebildeten Speicherstrecken 8.1 und 8.2 im Bereich des Spaltes 14 seitlich dort begrenzen, wo dieser Spalt 14 nicht durch das Tragelement 21 verschlossen ist. Die Behälterführungsmittel 23 können auf sehr unterschiedliche Art realisiert sein, beispielsweise in Form von teleskopierbaren Behälterführungen oder -führungsgeländern, die einerseits am Maschinengestell und andererseits an dem Tragelement 21 befestigt sind, oder in Form von anhebbaren und versenkbaren und/oder kippbaren, beispielsweise lamellenartigen Führungselementen, die dann dort zur Führung der Behälter 2 über die Transportebene TE nach oben vorstehen, wo der jeweiligen Positionierung des Überleitelementes 9 entsprechend der Spalt 14 nicht durch das Tragelement 21 abgedeckt ist. Die Steuerung der anhebbaren und versenkbaren und/oder kippbaren Führungselemente erfolgt synchron mit der Bewegung des Überleitelementes 9, beispielsweise ebenfalls durch den Linearantrieb 22 oder durch das Überleitelement 9 bzw. das Tragelement 21.

Bei entsprechender Ausbildung der Transportelemente 4 und 5 bzw. der diese Transportelemente bildenden Transportbänder 4.1 und 5.1 ist es auch möglich, die Transportelemente 4 und 5 so anzuordnen, dass sie ohne die Bildung des Spaltes 14 seitlich aneinander anschließen. Das Überleitelement 9 ist an einem Halte- oder Tragelementes oder Steg 9.1 gehalten, der unterhalb der Transportebene TE mit dem dort angeordneten Stellantrieb verbunden ist und der die beiden Transportelemente 4 und 5 dort, wo sich das beispielsweise ruten-, keil- und/oder schiffchenförmige Tragelement oder der Steg 9.1 befindet, voneinander beabstandet. Das Tragelement oder der Steg 9.1 befindet sich dabei dann bevorzugt an der der jeweiligen Speicherstrecke 8.1 bzw. 8.2 abgewandten Seite des Überleitabschnittes 10.

Die Erfindung wurde voranstehend an Ausführungsbeispielen beschrieben. Es versteht sich, dass zahlreiche weitere Abwandlungen möglich sind, ohne dass dadurch der der Erfindung zugrundeliegende Gedanke verlassen wird.

So wurde vorstehend davon ausgegangen, dass die Speichervorrichtung 1 bzw. 1 a ein Überleitelement 9 mit zwei diesem Überleitelement zugeordneten entgegengesetzt fördernden Speicherstrecken 8.1 und 8.2 aufweist. Grundsätzlich besteht auch die Möglichkeit, zwei oder mehr als zwei Überleitelemente 9 vorzusehen, denen dann jeweils zwei Speicherstrecken mit entgegen gesetzter Förderrichtung zugeordnet sind und die innerhalb der Speichervorrichtung, d.h. in der Behältertransportrichtung durch die Speichervorrichtung kaskadenartig aufeinander folgen.

Weiterhin wurde vorstehend insbesondere auch zur Vereinfachung der Beschreibung davon ausgegangen, dass die Transportelemente 4 und 5 jeweils von einem einzigen Transportband 4.1 bzw. 5.1 gebildet sind. In der Praxis besteht jedes Transportelement 4 und 5 aber bevorzugt aus mehreren parallel zueinander angeordneten und zumindest quer zur Transportrichtung A bzw. B aneinander anschließenden Transportbändern.

Vorstehend wurde weiterhin davon ausgegangen, dass das Überleitelement 9 ein "passives" Element ist, d.h. einen gegenüber der jeweiligen Transportrichtung A bzw. B schräg verlaufenden Überleitabschnitte 10 aufweist, der eine Führungs- oder Gleitfläche für die Behälter 2 bildet, an der die Behälter 2 insbesondere durch die Förderwirkung des Transportelementes 4 und unterstützt durch den Staudruck des Behälterstromes auf die Speicherstrecke 8.2 gleiten. Um das Umlenken bzw. Überleiten der Behälter 2 von dem Transportelement 4 bzw. von der dortigen Speicherstrecke 8.1 auf das Transportelement 5 bzw. auf die dortige Speicherstrecke 8.2 weiter zu verbessern, ist es aber auch möglich, das Überleitelement 9 so auszuführen, dass dessen Überleitabschnitt 10 zumindest auf einer Teillänge von einem umlaufenden Transportelement, beispielsweise von einem endlos umlaufenden Transportband gebildet ist, wie dies in der Figur 4 mit den beiden Transportbändern 24 und 25 und mit unterbrochenen Linien angedeutet ist, wobei diese Transportelemente auch zu einem einzigen Transportelement zusammengefasst sein können und/oder bevorzugt insbesondere hinsichtlich ihrer Geschwindigkeit unabhängig von der Stellung oder Position des Überleitelementes 9 und/oder der Fördergeschwindigkeit der Transportelemente 4 und 5 steuerbar sind. Anstelle der beiden Transportbänder 24 und 25, die jeweils mit ihrer dem Behältereinlauf 1.1 bzw. dem Behälterauslauf 1.2 zuwandten Länge ihrer Schlaufen eine Anlage für die Behälter 2 bilden, kann wenigstens ein andersartiges umlaufend angetriebenes Transport- und Transferelement vorgesehen sein, welches an seiner den Speicherstrecken 8.1 und 8.2 zugewandten Seite eine Anlage und/oder einen Mitnahmeabschnitt für die Behälter 2 bildet.

Weiterhin besteht die Möglichkeit, dass die Behälterführungen 6, 7 und/oder 23 von Elementen gebildet sind, die sich in der jeweiligen Transportrichtung A bzw. B bewegen, beispielsweise durch Ausbildung dieser Behälterführungen als endlos umlaufend angetriebene riemen- oder kettenartige Elemente, deren in der jeweiligen Transportrichtung A bzw. B umlaufende Schlaufenlängen die entsprechenden Behälteranlagen oder Führungen bilden. Die Antriebe für derartige Behälterführungen sind dann bevorzugt ebenfalls unterhalb der Transportebene TE angeordnet, sodass die Speichervorrichtung und deren Transportfläche an ihrer Oberseite unbehindert zugänglich und/oder einsichtig ist, insbesondere auch für opto-elektrische Sensorsysteme oder entsprechende Kameras für die Steuerung und/oder Überwachung der Speichervorrichtung.

Weiterhin besteht die Möglichkeit, dass in Transportrichtung A des Transportelementes 4 vor dem Überleitelement 9 wenigstens ein den Strom der Produkte bzw. Behälter 2 leitendes Element vorgesehen ist, welches in einer Richtung parallel zu dem Überleitelement 9 oder dessen Überleitabschnitt 10 antreibbar und/oder bewegbar ist, wobei das den Strom der Behälter 2 leitende Element dann vorzugsweise eigenständig verstellbar ist, und zwar beispielsweise auch für eine Änderung des Abstandes zwischen dem den Strom der Behälter 2 leitenden Element und Überleitelement 9 oder dessen Überleitabschnitt 10.

### Bezugszeichenliste

- 1, 1 a: Speichervorrichtung
- 2: Behälter
- 3: Maschinengestell
- 4, 5: Transportelement
- 4.1, 5.1: Transportband
- 6, 7: seitliche Behälterführung
- 8: Transportfläche
- 8.1, 8.2: Speicher- oder Pufferstrecke
- 9: Überleitelement
- 10: Überleitabschnitt
- 10.1, 10.2: Teilabschnitt
- 11: Antriebs- und Führungselement
- 11.1: obere Schlaufenlänge
- 12, 13: Umlenkrad
- 14: Spalt
- 15: Stellmotor
- 16: Antriebsrad
- 17, 18: Umlenkrolle
- 19: Sensorsystem
- 20: Steuereinrichtung
- 21: Halte- oder Tragelement
- 22: Stell- oder Linearantrieb
- 23: Behälterführungsmittel
- 24, 25: Transportelement oder -band
- A, B: Transportrichtung
- C: Verstellrichtung des Überleitelementes 9
- M: Mittelebene
- α, β: Winkel

## Patentansprüche

1. Speichervorrichtung für Produkte (2), mit wenigstens zwei parallelen Transportelementen (4, 5) mit entgegen gesetzter Transportrichtung (A, B) sowie mit wenigstens einem Überleitelement (9), welches wenigstens einen sich über die Transportelemente (4, 5) erstreckenden Überleitabschnitt (10) zum Überleiten der Produkte (2) von einer ersten Speicherstrecke (8.1), die auf einem in Richtung zum Überleitabschnitt (10) fördernden ersten der Transportelemente (4, 5) gebildet ist, auf eine zweite Speicherstrecke (8.2), die auf einem vom Überleitabschnitt (10) wegfördernden zweiten der Transportelemente (4, 5) gebildet ist, sowie mit einem Stellantrieb (15, 22) zum Verstellen (C) des Überleitelementes (9) durch Bewegen entlang der Transportstrecken (4, 5) zur Änderung der Aufnahmekapazität der Speicherstrecken (8.1, 8.2), wobei die Speicherstrecken (8.1, 8.2) eine Transportebene (TE) bilden, wobei unterhalb der Transportebene (TE) der Speicherstrecken (8.1, 8.2) der Stellantrieb (15, 22) angeordnet ist, wobei zur Steuerung oder Regelung der Aufnahmekapazität der Speichervorrichtung (1) ein Sensorsystem (19) mit wenigstens einer elektronischen Kamera vorgesehen ist, das zur Erfassung des Belegungsgrads der Speicherstrecken (8.1, 8.2) ausgebildet und mit einer elektronischen Steuereinrichtung (20) verbunden ist, wobei das Sensorsystem (19) zur Erfassung von allen relevanten aktuellen Informationen und Daten über den Betriebszustand zumindest eines Teilbereiches der Speichervorrichtung ausgebildet ist, wobei die entsprechenden Daten und auch die von der elektronischen Kamera bereitgestellten Bilddaten in der Steuereinrichtung (20) mit einem entsprechenden Programm oder mit einer Bildverarbeitung analysiert und zur aktiven Steuerung des Überleitelements (9) und der Transportelemente (4, 5) ausgewertet werden, wobei die Transportelemente (4, 5) oder deren Transportgeschwindigkeit unabhängig von der Verstellung (C) des Überleitelementes (9) steuerbar sind.

2. Speichervorrichtung nach Anspruch 1, **dadurch gekennzeichnet, dass** die Transportelemente (4, 5) oder deren Transportgeschwindigkeiten unabhängig von einander steuerbar sind.

3. Vorrichtung nach Anspruch 1 oder 2, **dadurch gekennzeichnet, dass** die Transportelemente (4, 5) jeweils von wenigstens einem eine geschlossene Schlaufe bildenden und umlaufend angetriebenen Transportband (4.1, 5.1) gebildet sind.

4. Speichervorrichtung nach einem der vorhergehenden Ansprüche, **dadurch gekennzeichnet, dass** das wenigstens eine Überleitelement (9) an einem Antriebs- und Führungselement (11, 21) vorgesehen ist, welches für das Verstellen des Überleitelementes (9) mit einem Stellantrieb (15, 22) antriebsmäßig verbunden ist, und dass der Stellantrieb (15, 22) von Antrieben der Transportelemente (4, 5) unabhängiger Antrieb ist.

5. Speichervorrichtung nach Anspruch 4, **dadurch gekennzeichnet, dass** das Antriebs- und Führungselement ein eine geschlossene Schlaufe bildendes band-ketten- oder riemenartiges Element oder ein stegartiges Halteelement (21) ist.

6. Speichervorrichtung nach einem der vorhergehenden Ansprüche, **dadurch gekennzeichnet, dass** das Überleitelement (9) an wenigstens einem Steg (9.1) oder an wenigstens einer flachen Steg- oder Halteplatte gehalten ist, die antriebsmäßig mit dem Stellantrieb (15; 22) verbunden ist, und dass sich der wenigstens eine Steg (9.1) oder die wenigstens eine Steg- oder Halteplatte beispielsweise zwischen den Transportelementen (4, 5) von der Unterseite der Transportebene (TE) über die Oberseite der Transportebene (TE) erstreckt und vorzugsweise unterhalb der Transportebene (TE) geführt ist.

7. Speichervorrichtung nach Anspruch 6, **dadurch gekennzeichnet, dass** der wenigstens eine Steg (9.1) oder die wenigstens eine Steg- oder Halteplatte nutenförmig, keilförmig oder schiffchenförmig ausgebildet ist, wobei beispielsweise mit der Bewegung des wenigstens einen Steges (9.1) oder der wenigstens einen Steg- oder Halteplatte die beiden Transportelemente (4, 5) zumindest in einem von dem wenigstens einen Steg (9.1) oder der Steg- oder Halteplatte eingenommenen Bereich auseinander bewegt werden.

8. Speichervorrichtung nach einem der vorhergehenden Ansprüche, **dadurch gekennzeichnet, dass** in Transportrichtung (A) des ersten Transportelementes (4) vor dem Überleitelement (9) und/oder am Überleitelement (9) wenigstens ein den Strom der Produkte (2) leitendes Element (25, 25) vorgesehen ist, welches in einer Richtung parallel zu dem Überleitelement (9) oder dessen Überleitabschnitt (10) antreibbar und/oder bewegbar ist, dass das den Strom der Produkte (2) leitende Element (24, 25) vorzugsweise eigenständig verstellbar ist, und zwar beispielsweise auch für eine Änderung des Abstandes zwischen dem den Strom der Produkte (2) leitenden Element (24, 25) und Überleitelement (9).

9. Speichervorrichtung nach einem der vorhergehenden Ansprüche, **dadurch gekennzeichnet, dass** das Überleitelement (9) oder zumindest ein Teil des Überleitabschnittes (10) von einem umlaufend angetriebenen Element, beispielsweise von einem endlos umlaufend angetriebenen Förderband (24, 25) und/oder von einem um eine Achse senkrecht oder im Wesentlichen senkrecht zur Transportebene (TE) umlaufend angetriebenen Element gebildet ist.

10. Speichervorrichtung nach einem der vorhergehenden Ansprüche, **dadurch gekennzeichnet, dass** der Überleitabschnitt (10) in Teilabschnitten (10.1, 10.2), die sich über das erste und zweite Transportelement (4, 5) erstrecken, jeweils gegenüber einer Achsrichtung senkrecht zur Transportrichtung (A, B) und parallel zur Transportebene (TE) geneigt ist, und dass die Neigung (α) des sich über das erste Transportelement (4) erstreckenden Teilanschnitts (10.1) größer ist als die Neigung (β) des sich über das zweite Transportelement (5) erstreckenden Teilanschnitts (10.2).

11. Speichervorrichtung nach einem der vorhergehenden Ansprüche, **dadurch gekennzeichnet, dass** zwischen den Transportelementen (4, 5) und parallel zu diesen Produktführungsmittel (23) vorgesehen sind, deren Position und/oder Länge in Abhängigkeit von der Position und/oder Bewegung des Überleitelementes (9) veränderbar ist, wobei die Produktführungsmittel (23) beispielsweise von wenigstens einem teleskopierbaren Führungselement und/oder von mehreren über die Transportebene (TE) anhebbaren und unter die Transportebene absenkbaren und/oder kippbaren Führungselementen oder Lamellen und/oder von wenigstens einer Schlaufe eines endlos umlaufend antreibbaren band- oder ketten- oder riemenartigen Elementes gebildet sind und/oder am Überleitelement (9) auf- und abwickelbar sind.

12. Speichervorrichtung nach einem der vorhergehenden Ansprüche, **gekennzeichnet durch** seitliche Produktführungsmittel (6, 7), wobei diese Führungsmittel vorzugsweise jeweils von wenigstens einem eine geschlossene Schlaufe bildenden und endlos umlaufend antreibbaren band- oder ketten- oder riemenartigen Element gebildet sind.

13. Speichervorrichtung nach einem der vorhergehenden Ansprüche, **dadurch gekennzeichnet, dass** das wenigstens eine Überleitelement (9) entfernbar ist.

14. Speichervorrichtung nach einem der vorhergehenden Ansprüche, **dadurch gekennzeichnet, dass** das Antriebs- und Führungselement (11, 15; 22) für die Positionsverstellung des Überleitelementes (9) unterhalb der Transportebene (TE) und/oder seitlich von den Transportelementen (4, 5) vorgesehen ist.

15. Speichervorrichtung nach einem der vorhergehenden Ansprüche, **dadurch gekennzeichnet, dass** der Stellantrieb (15, 22) des Überleitelementes (9) und/oder der wenigstens eine Antrieb der wenigstens zwei Transportelemente (4, 5) ein frequenzgeregelter Motor, ein Servomotor oder ein Direktantrieb ist.

## Claims

1. Storage device for products (2), with at least two parallel transport elements (4, 5), with an opposed transport device (A, B) and with at least one transfer element (9), which comprises at least one transfer section (10) extending over the transport elements (4, 5) for transferring the products (2) from a first storage segment (8.1), which is formed on a first of the transport elements (4, 5) conveying in the direction to the transfer section (10), onto a second storage segment (8, 2), which is formed on a second of the transport elements (4, 5) conveying away from the transfer section (10), and with an actuator drive (15, 22) for the adjustment (C) of the transfer element (9) by movement along the transport segments (4, 5) in order to change the receiving capacity of the storage segments (8.1, 8.2), wherein the storage segments (8.1, 8.2) form a transport plane (TE), wherein the actuator drive (15, 22) is arranged beneath the transport plane (TE) of the storage segments (8.1, 8.2), wherein, in order to control or regulate the receiving capacity of the storage device (1), a sensor system (19) with at least one electronic camera is provided, which is configured for detecting the degree of occupation of the storage segments (8.1, 8.2) and is connected to an electronic control device (20), wherein the sensor system (19) is configured for detecting all relevant current information and data relating to at least one part region of the storage device, wherein the corresponding data, and also the image data provided by the electronic camera, are analysed in the control device (20) with a corresponding program or by image processing, and are assessed for the active controlling of the transfer element (9) and of the transport elements (4, 5), wherein the transport elements (4, 5) or their transport speed can be controlled independently of the adjustment (C) of the transfer element (9).

2. Storage device according to claim 1, **characterised in that** the transport elements (4, 5) or their transport speeds can be controlled independently of one another.

3. Device according to claim 1 or 2, **characterised in that** the transport elements (4, 5) are each formed from at least one transport band (4.1, 5.1) forming a closed loop and driven so as to circulate.

4. Storage device according to any one of the preceding claims, **characterised in that** the at least one transfer element (9) is provided at a drive-and-guide element (11, 21), which is drive-connected to an actuator drive (15, 22) for the adjustment movement of the transfer element (9), and that the actuator drive (15, 22) is a drive independent of the drives of the transport elements (4, 5).

5. Storage device according to claim 4, **characterised in that** the drive-and-guide element is a band, chain, or belt element forming a closed loop, or a web-type holding element (21).

6. Storage device according to any one of the preceding claims, **characterised in that** the transfer element (9) is held on at least one web (9.1) or on at least one flat web plate or holding plate, which is drive-connected to the actuator drive (15; 22), and that the at least one web (9.1) or the at least one web plate or holding plate extends, for example, between the transport elements (4, 5) from the under side of the transport plane (TE) over the upper side of the transport plane (TE) and is preferably guided beneath the transport plane (TE).

7. Storage device according to claim 6, **characterised in that** the at least one web (9.1) or the at least one web plate or holding plate is configured in the form of a groove, wedge, or boat, wherein, for example, with the movement of the at least one web (9.1) or of the at least one web plate or holding plate, the two transport elements (4, 5) are moved apart from one another in a region which is occupied by the at least one web (9.1) or the web plate or holding plate.

8. Storage device according to any one of the preceding claims, **characterised in that** at least one element (25, [*24?*] 25) is provided, which guides the flow of products (2) in the transport direction (A) of the first transport element (4) upstream of the transfer element (9) and/or at the transfer element (9), which can be driven and/or moved in a direction parallel to the transfer element (9) or its transfer section (10), that the element (24, 25) guiding the products (2) is preferably individually adjustable, and specifically, for example, also for a change in the distance interval between the element (24, 25) guiding the flow of products (2) and the transfer element (9).

9. Storage device according to any one of the preceding claims, **characterised in that** the transfer element (9) or at least a part of the transfer section (10) is formed from an element driven such as to circulate, for example by an endlessly circulating driven conveyor belt (24, 25) and/or by an element driven so as to circulate about an axis perpendicular or essentially perpendicular to the transport plane (TE).

10. Storage device according to any one of the preceding claims, **characterised in that** the transfer section (10) is inclined in part sections (10.1, 10.2), which extend over the first and second transport elements (4, 5), in each case opposite an axial direction perpendicular to the transport direction (A, B) and inclined parallel to the transport plane (TE), and that the inclination (α) of the part section (10.1) extending over the first transport element (4) is greater than the inclination (β) of the part section (10.2) extending over the second transport element (5).

11. Storage device according to any one of the preceding claims, **characterised in that** product guide means (23) are provided between the transport elements (4, 5) and parallel to these, of which the position and/or length can be changed as a dependency of the position and/or movement of the transfer element (9), wherein the product guide means (23) are formed, for example, from at least one telescopic guide element and/or by several guide elements or plates which can be raised over the transport plane (TE) and lowered below the transport plane and/or tilted, and/or from at least one loop of an element driven such as to be endlessly circulating in the form of a band or chain or belt, and can be wound up and unwound at the transfer element (9).

12. Storage device according to any one of the preceding claims, **characterised by** lateral product guide means (6, 7), wherein these guide means are preferably formed in each case from at least one element forming at least one closed loop and driven such as to be endlessly, in the form of a band or chain or belt.

13. Storage device according to any one of the preceding claims, **characterised in that** the at least one transfer element (9) can be removed.

14. Storage device according to any one of the preceding claims, **characterised in that** the drive-and-guide element (11, 15; 22) is provided for the position adjustment movement of the transfer element (9) beneath the transport plane (TE) and/or to the side of the transport elements (4, 5).

15. Storage device according to any one of the preceding claims, **characterised in that** the actuator drive (15, 22) of the transfer element (9) and/or the at least one drive of the at least two transport elements (4, 5) is a frequency-regulated motor, a servomotor, or a direct drive.

## Revendications

1. Dispositif de stockage pour des produits (2), comprenant au moins deux éléments de transport (4, 5) parallèles présentant un sens de transport (A, B) opposé ainsi qu'au moins un élément de transfert (9), qui présente au moins une section de transfert (10) s'étendant au-dessus des éléments de transport (4, 5) et servant à transférer les produits (2) d'une première voie de stockage (8.1), qui est formée sur un premier des éléments de transport (4, 5) procédant au convoyage dans la direction de la section de transfert (10), sur une deuxième voie de stockage (8.2), qui est formée sur un deuxième des éléments de transport (4, 5) procédant à l'évacuation de la section de transfert (10), comprenant également un entraînement de réglage (15, 22) servant à déplacer (C) l'élément de transfert (9) par le déplacement le long des voies de transport (4, 5) aux fins de la modification de la capacité de prise en charge des voies de stockage (8.1, 8.2), dans lequel les voies de stockage (8.1, 8.2) forment un plan de transport (TE), dans lequel l'entraînement de réglage (15, 22) est disposé sous le plan de transport (TE) des voies de stockage (8.1, 8.2), dans lequel est prévu, afin de commander ou de réguler la capacité de prise en charge du dispositif de stockage (1), un système de détection (19) comprenant au moins une caméra électronique, lequel est réalisé pour détecter le degré d'occupation des voies de stockage (8.1, 8.2) et est relié à un système de commande (20) électronique, dans lequel le système de détection (19) est réalisé pour détecter toutes les informations et données instantanées importantes concernant l'état de fonctionnement d'au moins une zone partielle du dispositif de stockage, dans lequel les données correspondantes et également les données d'image fournies par la caméra électronique sont analysées dans le système de commande (20) avec un programme correspondant ou avec un traitement d'images et sont évaluées aux fins de la commande active de l'élément de transfert (9) et des éléments de transport (4, 5), dans lequel les éléments de transport (4, 5) ou la vitesse de transport de ces derniers peuvent être commandés indépendamment du déplacement (C) de l'élément de transfert (9).

2. Dispositif de stockage selon la revendication 1, **caractérisé en ce que** les éléments de transport (4, 5) ou les vitesses de transport de ces derniers peuvent être commandés les uns indépendamment des autres.

3. Dispositif selon la revendication 1 ou 2, **caractérisé en ce que** les éléments de transport (4, 5) sont formés respectivement par au moins une bande transporteuse (4.1, 5.1) formant une boucle fermée et entraînée en rotation.

4. Dispositif de stockage selon l'une quelconque des revendications précédentes, **caractérisé en ce que** l'au moins un élément de transfert (9) est prévu sur un élément d'entraînement et de guidage (11, 21), qui est relié selon une technique d'entraînement à un entraînement de réglage (15, 22) en vue du déplacement de l'élément de transfert (9), et **en ce que** l'entraînement de réglage (15, 22) est un entraînement ne dépendant pas de l'entraînement des éléments de transport (4, 5).

5. Dispositif de stockage selon la revendication 4, **caractérisé en ce que** l'élément d'entraînement et de guidage est un élément de type chenille à bande ou courroie formant une boucle fermée ou un élément de maintien (21) de type élément de liaison.

6. Dispositif de stockage selon l'une quelconque des revendications précédentes, **caractérisé en ce que** l'élément de transfert (9) est maintenu sur au moins une entretoise (9.1) ou sur au moins un panneau de liaison ou de maintien plat, lequel est relié selon la technique d'entraînement à l'entraînement de réglage (15 ; 22), et **en ce que** l'au moins un élément de liaison (9.1) ou l'au moins un panneau de liaison ou de maintien s'étend par exemple entre les éléments de transport (4, 5) depuis le côté inférieur du plan de transport (TE) au-dessus du côté supérieur du plan de transport (TE) et est guidé de préférence en dessous du plan de transport (TE).

7. Dispositif de stockage selon la revendication 6, **caractérisé en ce que** l'au moins un élément de liaison (9.1) ou l'au moins un panneau de liaison ou de maintien est réalisé de manière à présenter une forme de rainure, de clavette ou de navette, dans lequel les deux éléments de transport (4, 5) sont déplacés de manière à s'éloigner l'un de l'autre au moins dans une zone occupée par l'au moins un élément de liaison (9.1) ou par le panneau de liaison ou de maintien par exemple à l'aide du déplacement de l'au moins un élément de liaison (9.1) ou de l'au moins un panneau de liaison ou de maintien.

8. Dispositif de stockage selon l'une quelconque des revendications précédentes, **caractérisé en ce qu'**au moins un élément (25, 25) acheminant le flux des produits (2) est prévu dans le sens de transport (A) du premier élément de transport (4) avant l'élément de transfert (9) et/ou sur l'élément de transfert (9), lequel peut être entraîné et/ou déplacé dans une direction de manière parallèle par rapport à l'élément de transfert (9) ou à la section de transfert (10) de ce dernier, que l'élément (24, 25) acheminant le flux des produits (2) peut être déplacé de préférence en toute autonomie, à savoir par exemple également en vue d'une modification de la distance entre l'élément (24, 25) acheminant le flux des produits (2) et l'élément de transfert (9).

9. Dispositif de stockage selon l'une quelconque des revendications précédentes, **caractérisé en ce que** l'élément de transfert (9) ou au moins une partie de la section de transfert (10) est formé(e) par un élément entraîné en rotation, par exemple par une bande de convoyage (24, 25) entraîné en rotation en continu et/ou par un élément entraîné en rotation autour d'un axe de manière perpendiculaire ou sensiblement perpendiculaire par rapport au plan de transport (TE).

10. Dispositif de stockage selon l'une quelconque des revendications précédentes, **caractérisé en ce que** la section de transfert (10) divisée en sections partielles (10.1, 10.2), lesquelles s'étendent au-dessus du premier et du deuxième élément de transport (4, 5), est inclinée respectivement par rapport à une direction axiale, de manière perpendiculaire par rapport au sens de transport (A, B) et de manière parallèle par rapport au plan de transport (TE), et que l'inclinaison (α) de la section partielle (10.1) s'étendant au-dessus du premier élément de transport (4) est plus grande que l'inclinaison (β) de la section partielle (10.2) s'étendant au-dessus du deuxième élément de transport (5).

11. Dispositif de stockage selon l'une quelconque des revendications précédentes, **caractérisé en ce que** sont prévus entre les éléments de transport (4, 5) et de manière parallèle par rapport à ces derniers, des moyens de guidage de produit (23), dont la position et/ou la longueur peuvent varier selon la position et/ou le déplacement de l'élément de transfert (9), dans lequel les moyens de guidage de produit (23) sont formés par exemple par au moins un élément de guidage télescopique et/ou par plusieurs éléments de guidage pouvant être soulevés au-dessus du plan de transport (TE) et pouvant être abaissés et/ou basculés sous le plan de transport ou par des lamelles et/ou par au moins une boucle d'un élément de type chenille à bande ou courroie entraîné en rotation en continu et/ou peuvent être enroulés et déroulés sur l'élément de transfert (9).

12. Dispositif de stockage selon l'une quelconque des revendications précédentes, **caractérisé par** des moyens de guidage de produit (6, 7) latéraux, dans lequel lesdits moyens de guidage sont formés de préférence respectivement par au moins un élément de type chenille à bande ou courroie formant une boucle fermée et pouvant être entraîné en rotation en continu.

13. Dispositif de stockage selon l'une quelconque des revendications précédentes, **caractérisé en ce que** l'au moins un élément de transfert (9) peut être retiré.

14. Dispositif de stockage selon l'une quelconque des revendications précédentes, **caractérisé en ce que** l'élément d'entraînement et de guidage (11, 15 ; 22) est prévu en vue du déplacement en position de l'élément de transfert (9) en dessous du plan de transport (TE) et/ou sur le côté des éléments de transport (4, 5).

15. Dispositif de stockage selon l'une quelconque des revendications précédentes, **caractérisé en ce que** l'entraînement de réglage (15, 22) de l'élément de transfert (9) et/ou l'au moins un entraînement des au moins deux éléments de transport (4, 5) est un moteur à réglage de fréquence, un servomoteur ou un entraînement direct.
